# FASCICULE DE BREVET EUROPEEN

(11) **EP 0 786 319 B1**
(45) Date de publication et mention de la délivrance du brevet: **26.04.2000**
(21) Numéro de dépôt: 97400127.3
(22) Date de dépôt: 21.01.1997
(51) Int. Cl.: B29C 33/68, B32B 27/08

(54) **Film ayant une faible perméabilité aux hydrocarbures**
Film mit niedriger Kohlenwasserstoff-Durchlässigkeit
Film with low hydrocarbon permeability

(30) Priorité: 23.01.1996 FR 9600735
(43) Date de publication de la demande: 30.07.1997
(73) Titulaire: ELF ATOCHEM S.A., 92800 Puteaux, Hauts-de-Seine (FR)
(72) Inventeur: Vandekerckhove, Franck, 8760 Meulebeke (BE); Bouilloux, Alain, 27300 Bernay (FR); Jacquemet, Régis, 27000 Evreux (FR); Echalier, Bruno, 75006 Paris (FR)
(74) Mandataire: Pochart, François

(56) Documents cités:
- EP-A- 0 364 956
- WO-A-91/15538
- DATABASE WPI Section Ch, Week 9147 Derwent Publications Ltd., London, GB; Class A, AN 91-344659 (47) XP002014715 & JP 03 231 812 A (UNITIKA K.K.) , 15 Octobre 1991
- DATABASE WPI Section Ch, Week 8220 Derwent Publications Ltd., London, GB; Class APQ, AN 82-40333E (20) XP002014716 & JP 57 059 720 A (UNITIKA K.K.) , 10 Avril 1982
- DATABASE WPI Section Ch, Week 8218 Derwent Publications Ltd., London, GB; Class AP, AN 82-36445E (18) XP002014717 & JP 57 053 353 A (TOPPAN PRINTING K.K.) , 30 Mars 1982

## Description

La présente invention a pour objet un nouveau film ayant une faible perméabilité aux hydrocarbures, et en particulier d'une part un nouveau film de relâchement ou film pelable pour produit de compoundage pour le moulage de feuilles ou en abrégé SMC pour Sheet Moulding Compound, et d'autre part un nouveau film pour ensachage de polystyrène expansible.

Les SMC sont utilisés dans la fabrication de pièces transformées aussi bien dans les domaines automobile (pare-chocs, hayons, etc.) que ceux du nautisme (coques de bateaux), de l'électronique (carters) ou du sanitaire.

Le SMC est généralement composé d'une résine polymère réticulable, en particulier un polyester insaturé ou une résine époxy, de charges de renforcement telles que des fibres de verre, ainsi que de divers autres additifs en quantités plus ou moins importantes.

Le SMC est ordinairement préparé en déposant des fibres sur une couche de résine polyester insaturé, elle-même supportée sur un film mobile, composé en général de polyéthylène ou de polyamide ou d'alliage de ces deux polymères. Un autre film de même nature est ensuite déposé au-dessus du système résine/charge de renforcement pour former une masse composite en sandwich entre les deux films. Le sandwich passe ensuite à travers une série de rouleaux de pétrissage et de compactage et est généralement enroulé sous forme de grands rouleaux.

Le SMC est alors stocké pour transformation ultérieure. Lors de la période de stockage, la résine polyester réticule partiellement, provoquant une augmentation de la viscosité du SMC, jusqu'à atteindre une consistance le rendant apte au moulage.

Les utilisateurs de SMC, en général les mouleurs, coupent un morceau de dimensions appropriées à partir du rouleau, retirent par pelage les films de support et placent le SMC dans un moule chauffé pour la transformation et la cuisson complète simultanées. Ainsi, des masses composites en sandwich de SMC trouvent une application facile dans des modes opératoires de moulage par compression.

Jusqu'à présent, trois propriétés principales ont été recherchées. Tout d'abord, le film de relâchement doit avoir une perméabilité au styrène très faible. Ensuite, le film de relâchement doit être facilement pelable, en particulier avec des procédés de défilmage automatique. Enfin, le film de relâchement doit présenter une reprise d'humidité et une perméabilité à l'eau très faibles.

Il a été proposé d'utiliser des films de polyéthylène comme films de relâchement. Si les propriétés de pelabilité et d'inertie à l'eau sont satisfaisantes, la perméabilité au styrène est trop forte.

Il a aussi été proposé d'utiliser des films de polyamide comme films de relâchement. Si les propriétés de perméabilité au styrène sont satisfaisantes, l'inertie à l'eau et la pelabilité ne sont pas satisfaisantes.

Pour atteindre les objectifs fixés ci-dessus, il a été proposé d'utiliser des films de relâchement à base de polyamide et de polyoléfine.

Ainsi, les documents EP-A-0 027 191, GB-A-2 225 583, ainsi que EP-A-0 506 515 décrivent des films de relâchement à base de polyamide et de polyoléfine, en particulier à base d'alliage de ces polymères, avec des proportions relatives variables.

JP-A-3231812 décrit un film de relâchement comprenent une couche en polyoléfine et une couche en un copolymère de polyester et de polysiloxane.

De plus, au cours de la fabrication des SMC, il est souvent nécessaire de souder les films inférieur et supérieur au niveau des bords, afin d'éviter une perte de styrène et une pénétration de l'eau au cours du stockage. On recherche donc des films qui présentent une bonne soudabilité.

Par ailleurs, les fabriquants de SMC produisent aussi des déchets de film, notamment au cours des phases de démarrage. Il serait aussi souhaitable que les films de relâchement soient parfaitement recyclables afin de limiter les pertes.

Or, à ce jour, aucun des films précités de l'art antérieur ne remplit les objectifs de soudabilité et de recyclabilité, tout en conservant les propriétés de base recherchées (perméabilité au styrène faible, bonne pelabilité et perméabilité à l'eau faible).

Les problèmes évoqués ci-dessus dans le domaine des SMC se retrouvent partiellement dans le domaine de l'ensachage de polymères expansibles, en particulier de polystyrène expansible. En effet, le film formant le sachet dans lequel sont placées les billes de polystyrène avec le pentane doit être étanche. Cette étanchéité est requise pour (i) éviter de perdre le pentane qui est dans les billes au cours du stockage et du transport et surtout (ii) éviter de laisser fuir du pentane qui provoque des incendies (le point éclair du pentane étant de -17°C). De plus, il est aussi souhaitable que le film formant le sachet soit soudable, ainsi que susceptible d'être recyclé.

La présente invention a donc pour objet un film ayant une faible perméabilité aux hydrocarbures.

La présente invention a plus particulièrement pour objet un film de relâchement pour SMC, qui possède les propriétés de base, qui est facilement soudable et recyclable, et qui de plus présente une bonne filmabilité, consistant en le film selon l'invention.

La présente invention a aussi plus particulièrement pour objet un film pour ensachage de polymère expansible, en particulier du polystyrène expansible, comprenant le film selon l'invention.

Ainsi, la présente invention fournit un film comprenant au moins une couche (i) et au moins une couche (ii) en une polyoléfine, caractérisé en ce qu'il a une faible perméabilité aux hydrocarbures et en ce que ladite au moins une couche (i) est en un alliage de polyamide/polyoléfine à matrice polyamide.

Selon un mode de réalisation, le film selon l'invention comprend une couche (i) centrale en ledit alliage polyamide/ polyoléfine et deux couches (ii) et (iii) externes en polyoléfine.

Selon un autre mode de réalisation, le film selon l'invention comprend une couche (i) en ledit alliage polyamide/polyoléfine et une couche (ii) en une polyoléfine, la couche de polyoléfine étant ainsi disposée d'un seul côté dudit alliage.

Selon encore un autre mode de réalisation, dans le film selon l'invention, ladite ou lesdites couche(s) de polyoléfine est(sont) constituée(s) de deux ou plusieurs sous-couches de polyoléfine.

Selon encore un autre mode de réalisation, le film selon l'invention comprend une ou plusieurs couche(s) d'un liant entre lesdites couches d'alliage polyamide/polyoléfine et de polyoléfine. A titre d'exemple de ce mode de réalisation, on peut envisager un film tel que polyoléfine/liant/alliage/ liant/polyoléfine ou encore alliage/liant/polyoléfine.

Dans les modes de réalisation indiqués ci-dessus, le contact entre le film de relâchement pelable et le SMC s'effectue soit par l'alliage, soit par la polyoléfine.

De même, dans les modes de réalisation indiqués ci-dessus, le contact entre le film et le polymère expansible s'effectue soit par l'alliage, soit par la polyoléfine.

Selon un mode de réalisation, dans le film selon l'invention, ledit alliage est un alliage comprenant les composants A, B, C et D selon les pourcentages pondéraux suivants :
30 ≤ A + B + C ≤ 60 ; A + B + C+ D = 100 ;
0 ≤ A ≤ 60 ; 0 ≤ B ≤ 60 ; 0 ≤ C ≤ 60 ;
lesdits composants A, B, C et D ayant les compositions suivantes :
- A est constitué d'au moins une polyoléfine composée d'une alpha-oléfine complètement ou partiellement linéaire dont le poids moléculaire est compris entre 1 000 et 1 000 000, ladite oléfine étant éventuellement fonctionnalisée;
- B représente l'alpha-oléfine décrite en A sur laquelle un ou deux monomère(s) fonctionnalisé(s) sont greffés ou copolymérisés, le taux de greffage ou de copolymérisation du ou des monomère(s) fonctionnalisé(s) étant compris entre 500 ppm et 6% en poids;
- C est un copolymère greffé constitué d'au moins un oligomère mono-aminé de polyamide et d'un polymère ou copolymère d'alpha-mono-oléfine greffé par un monomère pouvant réagir avec la fonction amine dudit oligomère mono-aminé;
- D est constitué d'au moins un (co)polyamide constitué:
   d'un polyamide obtenu à partir d'acide(s) aliphatique(s) carboxylique et d'une(de) diamine(s) aliphatique(s), chacun possédant entre 6 et 24 atomes de carbone; et/ou d'un polyamide obtenu à partir d'un ou plusieurs acide(s) amino-aliphatique(s) ou de lactame(s) possédant de 6 à 24 atomes de carbone.

Selon encore un autre mode de réalisation, dans le film selon l'invention, dans ledit alliage polyamide/polyoléfine, le polyamide est le polyamide PA-6 et/ou le PA-6,6.

Selon encore un autre mode de réalisation, dans le film selon l'invention, dans ledit alliage polyamide/polyoléfine, ladite polyoléfine est du polyéthylène et/ou du polypropylène.

Selon encore un autre mode de réalisation, dans le film selon l'invention, l'alliage polyamide/polyoléfine comprend un agent compatibilisant consistant en un copolymère d'éthylène et d'acide (méth)acrylique ou de (méth)acrylate d'alkyle greffé maléique.

Selon encore un autre mode de réalisation, dans le film selon l'invention, l'alliage polyamide/polyoléfine est choisi parmi les alliages suivants :
- alliage comprenant, en % en poids, 55 à 70% de PA-6; 5 à 15% d'un copolymère éthylène/propylène majoritaire en polypropylène, greffé par de l'anhydride maléique puis condensé ensuite avec des oligomères monoaminés de caprolactame; et le complément à 100% en polypropylène;
- alliage comprenant, en % en poids, 55 à 70% de PA-6; 5 à 15% d'au moins un copolymère de l'éthylène avec (i) un (méth)acrylate d'alkyle ou un ester vinylique d'acide carboxylique insaturé et (ii) un anhydride d'acide carboxylique insaturé ou un époxyde insaturé, le monomère (ii) étant greffé ou copolymérisé; et le complément à 100% en polyéthylène;
- alliage comprenant, en % en poids, 55 à 70% de PA-6; 5 à 15% de polyéthylène ou copolymères de l'éthylène et d'une alphaoléfine greffé par de l'anhydride maléique ou du méthacrylate de glycidyle; et le complément à 100% en polyéthylène.

Selon encore un autre mode de réalisation, dans le film selon l'invention, la polyoléfine dudit alliage et la polyoléfine de la ou des couche(s) (ii) et/ou (iii) sont sensiblement identiques.

Selon encore un mode de réalisation, dans le film selon l'invention, la polyoléfine de la ou des couche(s) (ii) et/ou (iii) est du polyéthylène.

Selon encore un mode de réalisation, dans le film selon l'invention, la polyoléfine de la ou des couche(s) (ii) et/ou (iii) est du polyéthylène contenant du polyéthylène greffé maléique ou un copolymère d'éthylène greffé maléique. Dans ce mode de réalisation, les proportions pondérales respectives du polyéthylène et du polyéthylène greffé maléique ou copolymère d'éthylène greffé maléique peuvent varier grandement, par exemple entre 95/5 et 50/50, de préférence entre 90/10 et 70/30.

On ne sortirait pas du cadre de l'invention si on utilisait des mélanges des constituants précités, tels que des mélanges d'alliages, des mélanges de polyoléfines, etc.

L'invention a aussi pour objet une structure sandwich comprenant une couche centrale de produit de compoundage de moulage de feuilles thermodurcissable non cuit et renforcé; et deux couches extérieures d'un film selon l'invention.

L'invention a encore pour objet un procédé de production de produit de coumpoundage de moulage de feuilles dans lequel :
(a) une couche de résine thermodurcissable est coulée, sous forme fluide, sur un film selon l'invention, avançant continuellement;
(b) une matière de renforcement est introduite sur la couche de fluide avançant;
(c) un film selon l'invention est placé en contact avec la surface supérieure de la couche de fluide renforcée en formant ainsi une masse composite prise en sandwich;
(d) on fait avancer la masse composite en sandwich à travers une série de rouleaux de pétrissage et de compactage; et
(e) on enroule la masse composite en sandwich suivant un rouleau.

L'invention sera décrite plus en détail ci-après.

Dans la présente demande, le terme "polyamide" désigne les produits de condensation :
d'un ou plusieurs alpha-omega-amino-acides, tels que ceux contenant plus de 5 atomes de carbone, par exemple de 6 à 12 atomes de carbone; des exemples de tels amino-acides sont les acides aminocaproïque, amino-7-heptanoïque, amino-11-undécénoïque et amino-12-dodécanoïque; ou
d'un ou plusieurs lactames correspondants aux amino-acides ci-dessus; des exemples de tels lactames sont les caprolactame, oenanlactame et lauryllactame; ou
d'une ou plusieurs combinaisons sensiblement stoechiométriques d'une ou plusieurs diamines aliphatiques et/ou cycloaliphatiques et/ou aromatique-aliphatiques, ou de leurs sels, avec un ou plusieurs diacides carboxyliques aliphatiques ou aromatiques, ou leurs sels; des exemples de telles diamines sont l'hexaméthylènediamine, la dodécaméthylènediamine, la métaxylylènediamine, le bis(4-aminocyclohexyl)méthane (BACM), le bis(3-méthyl-4-aminocyclohexyl)méthane (BMACM), et la triméthylhexaméthylène-diamine, tandis que des exemples de tels diacides sont les acides téréphtalique, isophtalique, adipique, azélaïque, sébacique, subérique et docédanedicarboxylique; ou
tous mélanges des monomères précités; et
tous mélanges des produits de condensation résultant, éventuellement avec d'autres polymères compatibles avec les polyamides.

A titre d'exemple, le polyamide est le PA6, PAS6,6, PA6,10, PA11, PA12, PA6,12, PA12,12 et PA-6/12 (copolymérisat de caprolactame et lauryllactame). Le poids moléculaire des polyamides peut varier dans un large mesure, ce que l'homme de l'art appréciera.

Dans la présente demande, le terme "polyoléfine" désigne les homopolymères ou copolymères d'alpha-oléfines ou de dioléfines.

Ces oléfines sont à titre d'exemple, éthylène, propylène, butène-1, octène-1, butadiène.
A titre d'exemple, on peut citer :
- le polyéthylène PE, le polypropylène PP, les copolymères de l'éthylène avec des alpha-oléfines. Ces polymères peuvent être greffés avec des anhydrides d'acides carboxyliques insaturés tel que l'anhydride maléique ou des époxydes insaturés tels que le méthacrylate de glycidyle.
- les copolymères de l'éthylène avec un ou plusieurs produit(s) choisi(s) parmi : (i) les acides carboxyliques insaturés, leurs sels, leurs esters; (ii) les esters vinyliques d'acides carboxyliques saturés tel que l'acétate de vinyle; (iii) les acides dicarboxyliques insaturés, leurs sels, leurs esters, leurs hemiesters, leurs anhydrides; et (iv) les époxydes insaturés.
Ces copolymères d'éthylène peuvent être greffés par des anhydrides d'acides dicarboxyliques insaturés ou des époxydes insaturés.
- les copolymères blocs à base de styrène, et notamment ceux constitués de séquences polystyrène et polybutadiène (SBS), de séquences polystyrène et polyisoprène (SIS), de séquences polystyrène et poly(éthylène-butylène) (SEBS), ces copolymères étant éventuellement maléisés.
Les copolymères mentionnés ci-dessus peuvent être copolymérisés de façon statistique ou séquencée et présenter une structure linéaire ou ramifiée.
Ce terme de polyoléfine couvre aussi les mélanges de plusieurs des polyoléfines citées ci-dessus.
A titre d'exemple, on peut utiliser :
le polyéthylène (HDPE, MDPE, LDPE ou VLDPE);
le polypropylène;
les copolymères éthylène/alpha-oléfine;
les copolymères éthylène/acétate de vinyle (EVA);
les copolymères éthylène/(méth)acrylate d'alkyle/anhydride maléique, l'anhydride maléique étant greffé ou copolymérisé;
les copolymères éthylène/(méth)acrylate d'alkyle/méthacrylate de glycidyle, le méthacrylate de glycidyle étant greffé ou copolymérisé.

Le poids moléculaire des polyoléfines peut varier dans un large mesure, ce que l'homme de l'art appréciera.

Par exemple, le poids moléculaire des polyoléfines peut être compris entre 1 000 et 1 000 000.

Dans la présente demande, le terme "alliage de polyamide/polyoléfine à matrice polyamide" désigne les produits comprenant un polyamide, tel que décrit ci-dessus; une polyoléfine, telle que décrite ci-dessus, et lorsque celle-ci ne contient pas suffisamment de fonctionnalité pour assurer la compatibilisation avec le polyamide un agent compatibilisant; la polyoléfine étant présente sous forme d'une phase dispersée dans la phase polyamide, qui est ainsi dénommée matrice polyamide.

Le ratio polyamide/polyoléfine dans l'alliage peut varier dans un large intervalle, ce qu'appréciera l'homme de l'art.
Par exemple, le polyamide représente de 25 à 75%, avantageusement de 30 à 70%, et plus particulièrement de 50 à 70% en poids du poids de l'alliage.

L'agent compatibilisant est présent en une quantité suffisante pour assurer la compatibilité, à savoir la dispersion de la polyoléfine dans la matrice polyamide sous forme de nodules. Le diamètre des nodules peut varier par exemple de 0,1 à 5µm.
Par exemple, l'agent compatibilisant peut représenter jusqu'à 25% en poids, voire jusqu'à 50% en poids, de la polyoléfine.

L'agent compatibilisant est un produit connu en soi pour compatibiliser les polyamides et les polyoléfines.

Des exemples de ces agents compatibilisants sont :
- le polyéthylène, le polypropylène, les copolymères éthylène/propylène, les copolymères éthylène/butène, tous ces produits étant greffés par de l'anhydride maléique ou du méthacrylate de glycidyle;
- les copolymères éthylène/(méth)acrylate d'alkyle/anhydride maléique, l'anhydride maléique étant greffé ou copolymérisé;
- les copolymères éthylène/acétate de vinyle/anhydride maléique, l'anhydride maléique étant greffé ou copolymérisé;
- les deux copolymères précédents dans lesquels l'anhydride est remplacé en tout ou partie par du méthacrylate de glycidyle;
- les copolymères éthylène/acide (méth)acrylique, et éventuellement leurs sels;
- les copolymères éthylène/(méth)acrylate d'alkyle/méthacrylate de glycidyle, le méthacrylate de glycidyle étant greffé ou copolymérisé;
- les copolymères greffés constitués d'au moins un oligomère mono-aminé de polyamide et d'un (co)polymère d'alphamonooléfine greffé par un monomère susceptible de réagir avec la fonction amine dudit oligomère;
De tels alliages, ou les agents compatibilisants, sont décrits dans les demandes FR-A-2 291 225, EP-A-0 342 066 et EP-A-0 218 665 dont le contenu est incorporé dans la présente demande.

Dans ces alliages peuvent être ajoutés de façon classique des élastomères tels que des EPR maléisés, des EPDM maléisés et autres.

Le terme de "polyoléfines sensiblement identiques" indique que les caractéristiques physiques et/ou chimiques et/ou physico-chimiques respectives sont proches. Par exemple, deux homopolymères du même monomère sont sensiblement identiques lorsque leurs poids moléculaires respectifs sont comparables. Par exemple encore, une homopolyoléfine est sensiblement identique à une copolyoléfine lorsque le co-monomère de cette dernière est présent en des quantités faibles. Par exemple encore, deux PE basse densité (PEBD) sont sensiblement identiques, de même que deux PE haute densité (PEHD), deux PE linéaires basse densité (LLDPE) ou encore deux PE très basse densité (VLDPE).

Dans la présente demande, le terme "liant" désigne les produits communément appelés liant de co-extrusion, liant thermoplastique, agent de collage thermofusible, etc..
A titre d'exemple, on peut citer les (co)polyoléfines modifiées par un dérivé d'acide carboxylique insaturé (la modification étant effectuée par copolymérisation, terpolymérisation ou greffage). On peut aussi utiliser à titre de liant certaines des polyoléfines ci-dessus, pour autant que la teneur en groupes fonctionnels soit suffisante pour assurer l'adhésion des couches entre elles. Des mélanges de liants sont aussi appropriés.
Des exemples de tels liants sont donnés dans les brevets suivants, de façon non-limitative, EP-A-210307, EP-A-33220, EP-266994, FR-A-2132780, EP-A-171777, US-P-4758477, US-P-4762890, US-P-4966810, US-P-4452942 et US-P-3658948.
Des exemples de ces liants de co-extrusion sont :
- les copolymères de l'éthylène copolymérisé avec butène, hexène, octène, mélangés éventuellement avec des copolymères éthylène-propylène, greffés avec de l'anhydride maléique, lesdits copolymères éthylène/alpha-oléfine contenant par exemple de 35 à 80% en poids d'éthylène, le taux de greffage en anhydride étant compris entre 0,01 et 1% en poids, par exemple entre 0,05 et 0,5%, par rapport au poids total de copolymère;
- les copolymères éthylène et acétate de vinyle (EVA), maléisés ou non (l'anhydride maléique pouvant être greffé ou terpolymérisé), contenant plus particulièrement jusqu'à 40% en poids d'acétate de vinyle, de 0,01 à 1% en poids d'anhydride maléique greffé ou de 0,1 à 10% en poids d'anhydride maléique terpolymérisé, par rapport au poids total de copolymère;
- les copolymères éthylène et (méth)acrylate d'alkyle (tel que acrylate de méthyle, d'éthyle ou de t-butyle) et anhydride maléique, contenant jusqu'à 40% en poids de (méth)acrylate d'alkyle et de 0,01 à 10% en poids d'anhydride maléique, par rapport au poids total de copolymère.

Le terme "hydrocarbures" tel qu'utilisé dans la présente invention désigne les produits tels que les aliphatiques et les aromatiques, éventuellement halogénés. Des exemples de tels hydrocarbures sont: propane, butane, pentane, hexane, cyclopentane, cyclohexane, octane, dichlorodifluorométhane, trifluorochlorométhane, 1,1,1,-difluorochloroéthane et styrène, ces hydrocarbures l'exception du styrène étant des agents gonflants classiques dans le domaine du polystyrène expansible.

Le pentane et le styrène sont les hydrocarbures auxquels on s'attachera plus particulièrement dans le cadre de l'invention.

Le terme "faible perméabilité" signifie que la perméabilité pour un hydrocarbure donné est inférieure à une valeur limite communément admise dans l'art considéré. A titre d'exemple, le seuil de perméabilité au styrène dans le domaine des films de relâchement pelables pour SMC est de 200 10⁻⁹ g.cm/cm2/h, tel que mesuré conformément à la méthode décrite par Bixter & Michaels, Institut Américain des Ingénieurs Chimistes, 53ème Réunion Nationale, Preprint 32d, 1964. Le seuil de perméabilité sera fonction du domaine technique considéré.

Les films selon l'invention, qui sont multicouches, peuvent être obtenus par des procédés classiques, à savoir la co-extrusion.

Chaque couche du film multicouches selon l'invention peut contenir des additifs classiques, tels que des additifs antistatiques, antiblock, etc.

Par ailleurs, des couches supplémentaires peuvent être présentes dans les films multicouches.

Dans les films multicouches pour une utilisation comme film pelable, l'épaisseur est comprise dans un large intervalle que l'homme de l'art appréciera, par exemple entre 5 et 300 µm, de préférence entre 10 et 50µm. L'épaisseur de films pour une utilisation comme matériau d'ensachage varie par exemple entre 30 et 150µm, de préférence entre 50 et 80µm.

De plus, les proportions des différentes couches, exprimées en % de l'épaisseur finale du film de relâchement peuvent aussi varier dans un large intervalle que l'homme de l'art appréciera, par exemple, le ratio alliage de polyamide/polyoléfine est compris entre 9/1 et 1/9, avantageusement entre 3/1 et 1/3, de préférence entre 1/2 et 2/1. Si un liant est présent, il peut représenter jusqu'à 30%, avantageusement jusqu'à 20% de l'épaisseur finale.

Les exemples suivants illustrent l'invention sans la limiter.

### Exemple 1:

On réalise un film tricouche, la couche centrale étant l'alliage et la couche externe étant une polyoléfine.
L'alliage est un alliage commercialisé par la société Elf Atochem sous la dénomination Orgalloy, qui est un alliage PA6/PE/terpolymère, constitué en poids de 65% de PA6 de MI=15-17, de 25% de PEHD et de 10% d'un copolymère éthylène/acrylate de butyle/anhydride maléique 90,9/6,0/3,1 en poids de MI=5 (190°C, 2,16kg).
La polyoléfine est un mélange 80/20 en poids de PEBD, commercialisé par la société BASF, et d'un copolymère LLDPE/EPR maléisé commercialisé par la société Elf Atochem sous la dénomination Orevac.
Les épaisseurs respectives de chaque couche sont, en µm, de 6/12/6.

Le film de relâchement est obtenu avec un matériel conventionnel; typiquement on utilise une extrudeuse tri-couches avec une filière de 150 mm, un entrefer de 0,7 mm, une vitesse de tirage de 9 m/mn, un taux de gonflage de 2,1 pour une largeur à plat de 500 mm; on utilise des températures typiques de 210 à 250°C pour le PE et 240 à 260°C pour l'alliage.

### Exemple 2 :

Les conditions de l'exemple 1 sont répétées, sauf que le PEBD est remplacé par du PEMD commercialisé par la société Fina.

### Exemple 3 :

Les conditions de l'exemple 2 sont répétées, sauf que les épaisseurs respectives de chaque couche sont maintenant, en µm, de 6,5/14/6,5.

### Exemple 4 :

On réalise cette fois un film bicouche; l'alliage est le même que dans les exemples 1-3 et la polyoléfine est identique à celle des exemples 2 et 3.
Les épaisseurs respectives de chaque couche sont, en µm, de 12/12.
Les conditions de l'extrusion sont les mêmes que dans les exemples 1-3, sauf que l'extrudeuse est bi-couche.

### Exemple 5 :

Les conditions de l'exemple 1 sont répétées, sauf que la polyoléfine est du PEMD commercialisé par la société Fina; les conditions de l'extrusion sont les mêmes que dans les exemples 1-3.

### Exemple 6 :

Les conditions de l'exemple 5 sont répétées, sauf que la polyoléfine est un mélange 80/20 en poids de PEMD, commercialisé par la société Fina et d'un copolymère LLDPE/EPR maléisé commercialisé par la société Elf Atochem sous la dénomination Orevac.

### Exemple 7 :

Les conditions de l'exemple 6 sont répétées, sauf que les 20% en poids copolymère LLDPE/EPR maléisé sont remplacés par la même quantité d'un terpolymère éthylène/ester acrylique/anhydride maléique à 9% en maléique commercialisé par la société Elf Atochem sous la dénomination Lotader.

### Exemple 8 :

Les conditions de l'exemple 6 sont répétées, sauf que le PEMD de Fina est remplacé par du PEBD commercialisé par la société Elf Atochem sous la dénomination Lotader.

### Exemple 9 :

On réalise un film tricouche, comprenant dans l'ordre une première couche de l'alliage des exemples 1-8, une couche de la polyoléfine de l'exemple 2 et une couche de la polyoléfine de l'exemple 5.

Les autres conditions opératoires de l'extrudeuse sont identiques à celles de l'exemple 5.

### Exemple 10 :

On réalise un film monocouche conformément à l'exemple 2 de la demande EP-A-0 506 515, qui est un alliage à base de PA-6 et de PP. L'épaisseur est de 22 µm, les conditions opératoires de l'extrudeuse sont les mêmes que celles de l'exemple 1.

### Exemple 11 :

On réalise un film monocouche en PA-6. L'épaisseur est de 22 µm, les conditions opératoires de l'extrudeuse sont les mêmes que celles de l'exemple 1.

On mesure certaines propriétés des films des exemples précédents; la résistance à la traction et l'allongement sont déterminées conformément à la norme ASTM D882, la résistance à la perforation (dart drop) est déterminée conformément à la norme ASTM 1709, la résistance à la déchirure (elmendorf) est déterminée conformément à la norme ASTM 1922, la contrainte au seuil d'écoulement est déterminée conformément à la norme ASTM D882.

Les résultats sont consignés dans le tableau ci-après, dans lequel SL et ST signifient respectivement sens longitudinal et sens transversal.

Ces résultats montrent que les films selon l'invention sont tout à fait adaptés, du point de vue mécanique, à l'application en tant que film de relâchement pelable pour SMC. Par ailleurs, on a pu évaluer les propriétés de perméabilité au styrène ainsi que la perméabilité à la vapeur d'eau et la reprise en poids (23°C et 100% d'humidité relative), puisqu'on ne note aucune dégradation ni du film ni du sandwich polyester dans les conditions normales d'utilisation et de stockage.

Par ailleurs, on mesure l'aptitude des films à être soudés, et leur soudabilité ressort des résultats des mesures effectuées conformément à l'art antérieur sur le soudage des films.

Enfin, on déterminé l'aptitude des films à être recyclés. Les films des exemples 3, 4 et 5 sont découpés puis broyés en paillettes dans un broyeur Pallman. Ce broyeur est un broyeur à rotor creux, à six couteaux dont trois fixes. les paillettes obtenues présentent une section droite avec un aspect associé de fragmentation.

Ces paillettes sont alors étuvées à 60°C pendant 24 heures afin d'éliminer toute trace d'humidité rémanente qui provoquerait la formation de petites bulles.

Ensuite, ces paillettes étuvées sont extrudées avec du PE dans un extrudeuse Kaufman, dont les conditions opératoires sont les suivantes :
Diamètre de filière: 150 mm; Entrefer: 0,8 mm; Vitesse de tirage: 9 m/mn; Taux de gonflage: 2,12; largeur de gaine à plat: 500 mm. Les profils de températures de l'extrudeuse Kaufman sont ceux associés à l'alliage Orgalloy, à savoir : en extrudeuse: 230-250°C; en tête: 240°C;

Sur cette extrudeuse, on réalise pour chaque broyat 2 films monocouche d'une épaisseur moyenne de 50 µm, le PE ajouté au broyat étant un PEBD de MI=0,3, avec des ratios en poids de 25% et 50%.

Les films sont fabriqués sans problème, sans aucune ségrégation (pas de formation de voûte au niveau de la goulotte d'alimentation). Les films obtenus sont relativement translucides, laiteux, résistants et sans humidité. Les films obtenus peuvent présenter toute épaisseur requise, par exemple entre 10 et 150 µm.

Le débit matière est élevé, à savoir 60 kg/h pour des vitesses de vis de 60 trs/mn à 110 trs/mn, ce qui démontre une excellente extrudabilité, ainsi qu'une excellente capacité à former des films. Par ailleurs, il n'est pas nécessaire d'extruder le mélange dans une vis spéciale, telle qu'une vis polyamide: les dispositifs d'extrusion de polyoléfines n'ont pas à être adaptés pour recevoir le broyat des films selon l'invention.

Les résultats des essais mécaniques (traction, résistance à la déchirure, "dart test") effectués sur les films obtenus à partir de PE et de films selon l'invention montrent que ces films présentent de bonnes caractéristiques mécaniques.

Tous les films selon l'invention présentent une perméabilité au styrène inférieure au seuil précité, à savoir 200 10⁻⁹ g.cm/cm2/h, en particulier inférieure à 50 10⁻⁹ g.cm/cm2/h.

### Exemple 12 :

Les films selon l'invention des exemples précédents sont utilisés pour la fabrication de sachets de conditionnement des granulés de polystyrène expansible, l'épaisseur des films étant cependant ajustée à 50µm.

La perméabilité au pentane est mesurée, et elle est de l'ordre de 0,7 g/m2/24hrs.

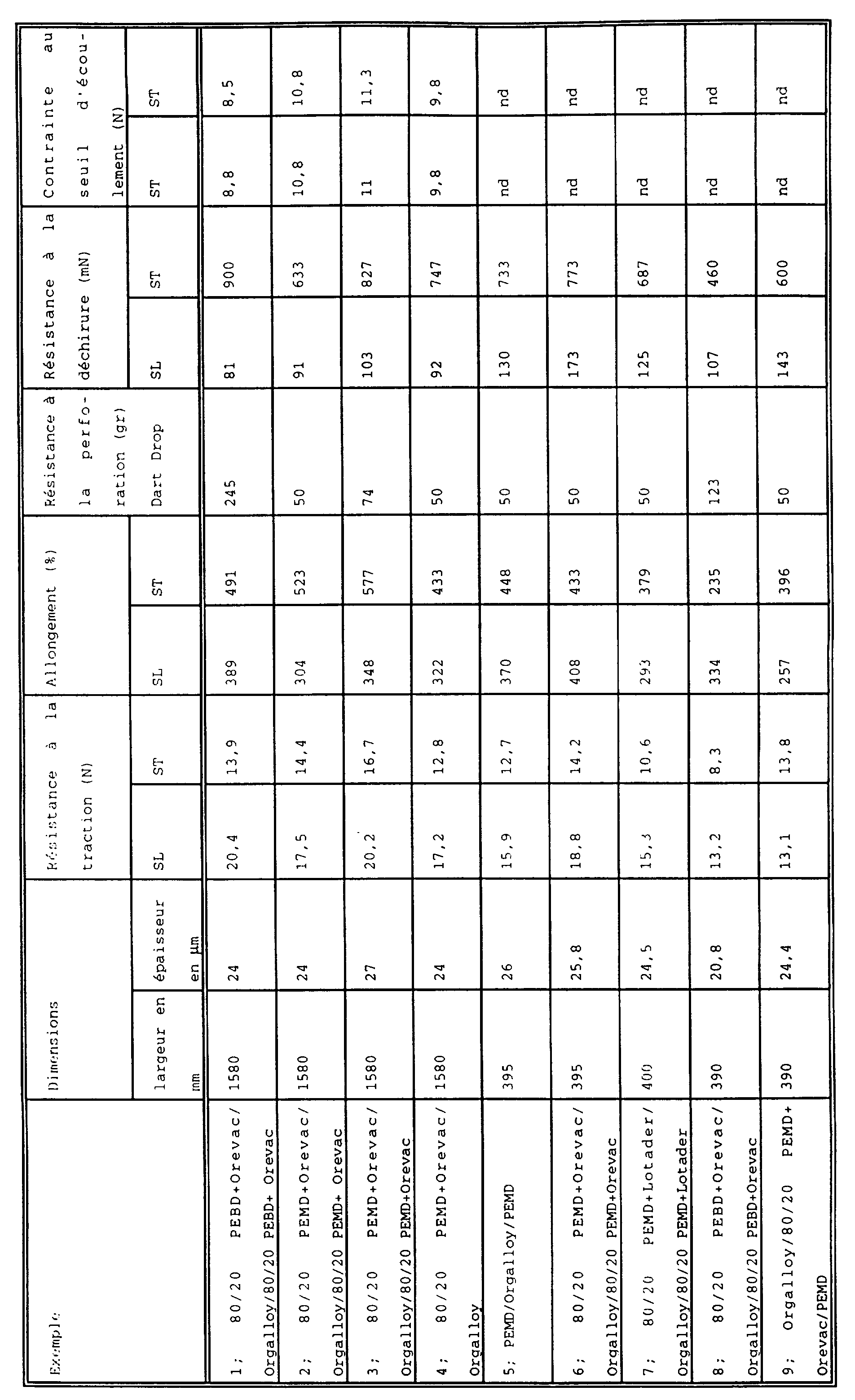

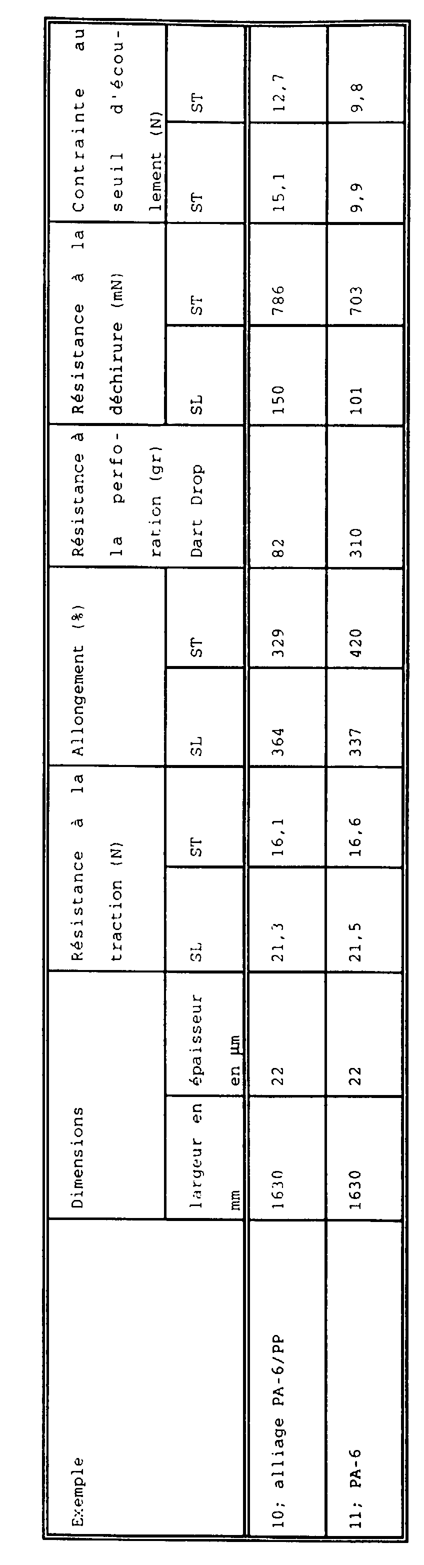

## Revendications

1. Film comprenant au moins une couche (i) et au moins une couche (ii) en une polyoléfine, caractérisé en ce qu'il a une faible perméabilité aux hydrocarbures et en ce que ladite au moins une couche (i) est en un alliage de polyamide/polyoléfine à matrice polyamide.

2. Film selon la revendication 1, comprenant une couche (i) centrale en ledit alliage polyamide/polyoléfine et deux couches (ii) et (iii) externes en polyoléfine.

3. Film selon la revendication 1, comprenant une couche (i) en ledit alliage polyamide/polyoléfine et une couche (ii) en une polyoléfine.

4. Film selon l'une des revendications 1 à 3, dans lequel ladite ou lesdites couche(s) de polyoléfine est(sont) constituée(s) de deux ou plusieurs sous-couches de polyoléfine.

5. Film selon l'une des revendications 1 à 4, comprenant une ou plusieurs couche(s) d'un liant entre lesdites couches d'alliage polyamide/polyoléfine et de polyoléfine.

6. Film selon l'une des revendications 1 à 5, dans lequel dans ledit alliage polyamide/polyoléfine, le polyamide est le polyamide PA-6 et/ou le PA-6,6.

7. Film selon l'une des revendications 1 à 6, dans lequel dans ledit alliage polyamide/polyoléfine, ladite polyoléfine est du polyéthylène et/ou du polypropylène.

8. Film selon l'une des revendications 1 à 7, dans lequel l'alliage polyamide/polyoléfine comprend un agent compatibilisant consistant en un copolymère d'éthylène et d'acide (méth)acrylique ou de (méth)acrylate d'alkyle greffé maléique.

9. Film selon l'une des revendications 1 à 7, dans lequel l'alliage polyamide/polyoléfine est un alliage comprenant les composants A, B, C et D selon les pourcentages pondéraux suivants :
30 ≤ A + B + C ≤ 60 ; A + B + C+ D = 100 ;
0 ≤ A ≤ 60 ; 0 ≤ B ≤ 60 ; 0 ≤ C ≤ 60 ;
lesdits composants A, B, C et D ayant les compositions suivantes :
- A est constitué d'au moins une polyoléfine composée d'une alpha-oléfine complètement ou partiellement linéaire dont le poids moléculaire est compris entre 1 000 et 1 000 000, ladite oléfine étant éventuellement fonctionnalisée;
- B représente l'alpha-oléfine décrite en A sur laquelle un ou deux monomère(s) fonctionnalisé(s) sont greffés ou copolymérisés, le taux de greffage ou de copolymérisation du ou des monomère(s) fonctionnalisé(s) étant compris entre 500 ppm et 6% en poids;
- C est un copolymère greffé constitué d'au moins un oligomère mono-aminé de polyamide et d'un polymère ou copolymère d'alpha-mono-oléfine greffé par un monomère pouvant réagir avec la fonction amine dudit oligomère mono-aminé;
- D est constitué d'au moins un (co)polyamide constitué:
d'un polyamide obtenu à partir d'acide(s) aliphatique(s) carboxylique et d'une(de) diamine(s) aliphatique(s), chacun possédant entre 6 et 24 atomes de carbone; et/ou d'un polyamide obtenu à partir d'un ou plusieurs acide(s) amino-aliphatique(s) ou de lactame(s) possédant de 6 à 24 atomes de carbone.

10. Film selon l'une des revendications 1 à 7, dans lequel l'alliage polyamide/polyoléfine est choisi parmi les alliages suivants :
- alliage comprenant, en % en poids, 55 à 70% de PA-6; 5 à 15% d'un copolymère éthylène/propylène majoritaire en polypropylène, greffé par de l'anhydride maléique puis condensé ensuite avec des oligomères monoaminés de caprolactame; et le complément à 100% en polypropylène;
- alliage comprenant, en % en poids, 55 à 70% de PA-6; 5 à 15% d'au moins un copolymère de l'éthylène avec (i) un (méth)acrylate d'alkyle ou un ester vinylique d'acide carboxylique insaturé et (ii) un anhydride d'acide carboxylique insaturé ou un époxyde insaturé, le monomère (ii) étant greffé ou copolymérisé; et le complément à 100% en polyéthylène;
- alliage comprenant, en % en poids, 55 à 70% de PA-6; 5 à 15% de polyéthylène ou copolymères de l'éthylène et d'une alphaoléfine greffé par de l'anhydride maléique ou du méthacrylate de glycidyle; et le complément à 100% en polyéthylène.

11. Film selon l'une des revendications 1 à 10, dans lequel la polyoléfine dudit alliage et la polyoléfine de la ou des couche(s) (ii) et/ou (iii) sont sensiblement identiques.

12. Film selon l'une des revendications 1 à 11, dans lequel la polyoléfine de la ou des couche(s) (ii) et/ou (iii) est du polyéthylène.

13. Film selon l'une des revendications 1 à 12, dans lequel la polyoléfine de la ou des couche(s) (ii) et/ou (iii) est du polyéthylène contenant du polyéthylène greffé maléique ou un copolymère d'éthylène greffé maléique.

14. Utilisation à titre de film de relâchement pour produit de compoundage de feuilles d'un film selon l'une quelconque des revendications 1 à 13.

15. Structure sandwich comprenant une couche centrale de produit de compoundage de moulage de feuilles thermodurcissable non cuit et renforcé; et deux couches extérieures d'un film selon l'une quelconque des revendications 1 à 13.

16. Procédé de production de produit de compoundage de moulage de feuilles dans lequel :
(a) une couche de résine thermodurcissable est coulée, sous forme fluide, sur un film selon l'une des revendications 1 à 13, avançant continuellement;
(b) une matière de renforcement est introduite sur la couche de fluide avançant;
(c) un film selon l'une quelconque des revendications 1 à 13 est placé en contact avec la surface supérieure de la couche de fluide renforcée en formant ainsi une masse composite prise en sandwich;
(d) on fait avancer la masse composite en sandwich à travers une série de rouleaux de pétrissage et de compactage; et
(e) on enroule la masse composite en sandwich suivant un rouleau.

17. Utilisation à titre de sachet de conditionnement de granulés de polystyrène expansible d'un film selon l'une quelconque des revendications 1 à 13.

## Patentansprüche

1. Film, umfassend mindestens eine Schicht (i) und mindestens eine Schicht (ii) aus einem Polyolefin, gekennzeichnet dadurch, daß dieser eine geringe Durchlässigkeit gegenüber Kohlenwasserstoffen aufweist und daß die mindestens eine Schicht (i) aus einer Legierung von Polyamid/Polyolefin mit Polyamidmatrix besteht.

2. Film gemäß Anspruch 1, umfassend eine zentrale Schicht (i) aus der Polyamid/Polyolefin-Legierung und zwei externe Schichten (ii) und (iii) aus Polyolefin.

3. Film gemäß Anspruch 1, umfassend eine zentrale Schicht (i) aus der Polyamid/Polyolefin-Legierung und eine externe Schicht (ii) aus Polyolefin.

4. Film gemäß mindestens einem der Ansprüche 1 bis 3, in dem die Schicht(en) aus Polyolefin aus zwei oder mehr Unterschichten aus Polyolefin besteht(en).

5. Film gemäß mindestens einem der Ansprüche 1 bis 4, umfassend eine oder mehrere Schicht(en) eines Binders zwischen den Schichten aus Polyamid/Polyolefin-Legierung und aus Poyolefin.

6. Film gemäß mindestens einem der Ansprüche 1 bis 5, in dem das Polyamid in der Polyamid/Polyolefin-Legierung PA-6 und/oder PA-6,6 Polyamid ist.

7. Film gemäß mindestens einem der Ansprüche 1 bis 6, in dem das Polyolefin in der Polyamid/Polyolefin-Legierung Polyethylen und/oder Polypropylen ist.

8. Film gemäß mindestens einem der Ansprüche 1 bis 7, in dem die Polyamid/Polyolefin-Legierung ein Verträglichkeitsmittel, bestehend aus einem malein-Pfropfcopolymer von Ethylen und (Meth)acrylsäure oder Alkyl(meth)acrylat enthält.

9. Film gemäß mindestens einem der Ansprüche 1 bis 7, in dem die Polyamid/Polyolefin-Legierung eine Legierung ist, welche die Bestandteile A, B, C und D gemäß der folgenden Gewichtsprozente enthält :
30 ≤ A + B+ C ≤60 ; A + B + C + D = 100 ;
0 ≤ A ≤ 60 ; 0 ≤ B 60 ; 0 ≤ C ≤ 60 ;
wobei die Bestandteile A, B, C und D die folgende Zusammensetzung aufweisen:
- A besteht aus mindestens einem Polyolefin, bestehend aus einem teilweise oder völlig linearen alpha-Olefin, dessen Molekulargewicht zwischen 1 000 und 1 000 000 liegt, wobei dieses Olefin funktionalisiert sein kann ;
- B stellt das unter A beschriebene alpha-Olefin dar, auf welchem ein oder zwei funktionalisiert(e) Monomer(e) pfropf- oder copolymerisiert ist(sind), wobei der Pfropf- bzw. Copolymerisationsgrad des(r) funktionalisierten Monomers(e) zwischen 500 ppm und 6 Gew.-% liegt.
- C ein Pfropfcopolymer ist, bestehend aus mindestens einem monoaminierten Polyamid-Oligomeren und einem alpha-mono-Olefinpolymer oder -copolymer, das mit einem Monomeren gepfropft ist, wobei das Monomer mit der Aminfunktion des monoaminierten Oligomeren reagieren kann ;
- D besteht aus mindestens einem (Co)polymeren, welches besteht
aus einem Polyamid, das ausgehend von aliphatischer(n) Carboxysäure(n) und einer oder mehreren aliphatischen Diaminen, welche jeweils zwischen 6 und 24 Kohlenstoffatome aufweisen, erhalten wurde; und/oder aus einem Polyamid, das ausgehend von einem oder mehreren Amino-aliphatischen Säuren oder Lactamen mit 6 bis 24 Kohlenstoffatomen erhalten wurde.

10. Film gemäß mindestens einem der Ansprüche 1 bis 7, in dem die Polyamid/Polyolefin-Legierung aus den folgenden Legierungen ausgewählt ist :
- Legierung umfassend, in Gew.%, 55 bis 70 % PA-6 ; 5 bis 15 % eines Ethylen-Propylen-Copolymers überwiegend aus Polypropylen, mit Maleinsäureanhydrid gepfropft und anschließend mit monoaminierten Caprolactam-Oligomeren kondensiert ; und der Rest Polypropylen ;
- Legierung umfassend, in Gew.%, 55 bis 70% PA-6 ; 5 bis 15% mindestens eines Ethylen-Copolymers mit (i) einem Alkyl(meth)acrylat oder einem Vinylester einer ungesättigten Carboxysäure und (ii) einem Anhydrid einer ungesättigten Carboxysäure oder einem ungesättigten Epoxyd, wobei das Monomer (ii) gepfropft oder copolymerisiert ist ; und der Rest Polyethylen;
- Legierung umfassend, in Gew.%, 55 bis 70% PA-6 ; 5 bis 15% Polyethylen oder Copolymere von Ethylen und einem alpha-Olefin, die mit Maleinsäureanhydrid oder Glycidylmethacrylat gepfropft sind; und der Rest Polyethylen.

11. Film gemäß mindestens einem der Ansprüche 1 bis 10, in dem das Polyolefin der Legierung und das Polyolefin der Schicht(en) (ii) und/oder (iii) im wesentlichen identisch sind.

12. Film gemäß mindestens einem der Ansprüche 1 bis 11, in dem das Polyolefin der Schicht(en) (ii) und/oder (iii) Polyethylen ist.

13. Film gemäß mindestens einem der Ansprüche 1 bis 12, in dem das Polyolefin der Schicht(en) (ii) und/oder (iii) Polyethylen enthaltend mit Malein gepfropftes Polyethylen oder mit Malein gepfropftes Ethylencopolymer.

14. Verwendung als Freigabefilm für Verbundprodukte von Folien eines Films gemäß mindestens einer der Ansprüche 1 bis 13.

15. Sandwichstruktur, umfassend eine zentrale Schicht eines ungehärteten und verstärkten Verbundproduktes von geformten wärmehärtbaren Folien ; und von zwei äußeren Schichten eines Films gemäß mindestens einem des Ansprüche 1 bis 13.

16. Verfahren zur Herstellung eines Verbundproduktes von geformten Folien, in welchem :
(a) eine Schicht von wärmehärtbarem Harz in fluider Form auf einen stetig vorlaufenden Film gemäß mindestens einem der Ansprüche 1 bis 13 gegossen wird ;
(b) ein Verstärkungmaterial auf die vorlaufenden Fluidschicht aufgebracht wird ;
(c) ein Film gemäß mindestens einem der Ansprüche 1 bis 13 mit der Oberfläche der verstärkten Fluidschicht in Kontakt gebracht wird, wodurch eine mehrlagige Verbundmasse gebildet wird ;
(d) die mehrlagige Verbundmasse durch eine Reihe von Misch- und Verdichtungswalzen hindurchgeführt wird ; und
(e) die mehrlagige Verbundmasse auf eine Walze aufgerollt wird.

17. Verwendung als Verpackungsbeutel von schäumbarem Polystyrolgranulat eines Films gemäß mindestens einem der Ansprüche 1 bis 13.

## Claims

1. A film comprising at least one layer (i) and at least a layer (ii) in a polyolefin, characterised in that it has low hydrocarbon permeability and that said at least one layer (i) is in a polyamide/polyolefin alloy having a polyamide matrix.

2. The film according to claim 1, comprising a central layer (i) formed of said polyamide/polyolefin alloy and two outer layers (ii) and (iii) formed of polyolefin.

3. The film according to claim 1, comprising one layer (i) formed of said polyamide/polyolefin alloy and one layer (ii) formed of a polyolefin.

4. The film according to any one of claims 1 to 3, in which said polyolefin layer or said polyolefin layers consist(s) of two or several polyolefin sub-layers.

5. The film according to any one of claims 1 to 4, comprising one or several layers of a binder between said polyamide/polyolefin alloy and polyolefin layers.

6. The film according to any one of claims 1 to 5, in which, in said polyamide/polyolefin alloy, the polyamide is polyamide PA-6 and/or PA-6,6.

7. The film according to one of claims 1 to 6, in which in said polyamide/polyolefin alloy, said polyolefin is polyethylene and/or polypropylene.

8. The film according to any one of claims 1 to 7, in which said polyamide/polyolefin alloy comprises an agent ensuring compatibility consisting of a copolymer of ethylene and (meth)acrylic acid or alkyl (meth)acrylate, functionalized with maleic anhydride.

9. The film according to any one of claims 1 to 7, in which said polyamide/polyolefin alloy is an alloy comprising components A, B, C and D in the following weight percentages :
30 ≤ A + B + C ≤ 60 ; A + B + C + D = 100 ;
0 ≤ A ≤ 60 ; 0 ≤ B ≤ 60 ; 0 ≤ C ≤ 60 ;
said components A, B, C and D having the following compositions:
- A consists of at least one polyolefin composed of a fully or partially linear alpha-olefin having a molecular weight comprised between 1,000 and 1,000,000, said olefin being optionally functionalized;
- B is the alpha-olefin described in A onto which one or several functionalized monomer(s) are grafted or copolymerized, the grafting or copolymerization rate of the functionalized monomer(s) being comprised between 500 ppm and 6% by weight;
- C is a grafted copolymer consisting of at least one mono-amino oligomer of polyamide and a polymer or copolymer of alpha-mono-olefin on which a monomer able to react with the amino function of said mono-amino oligomer has been grafted;
- D consists of at least one (co)polyamide consisting of a polyamide obtained from carboxylic aliphatic acid(s) and one or several aliphatic diamines each having between 6 and 24 carbon atoms and/or a polyamide obtained from one or several amino-aliphatic acids or lactam(s) having 6 to 24 carbon atoms.

10. The film according to any one of claims 1 to 7, in which said polyamide/polyolefin alloy is selected from the following alloys:
- an alloy comprising, in % by weight, 55 to 70% PA-6, 5 to 15% of an ethylene/propylene copolymer with a majority of polypropylene, grafted with maleic anhydride then condensed with mono-amino oligomers of caprolactam; made up to 100% with polypropylene;
- an alloy comprising, in % by weight, 55 to 70% PA-6, 5 to 15 % of at least one ethylene copolymer with (i) an alkyl (meth)acrylate or an unsaturated carboxylic acid vinyl ester and (ii) an unsaturated carboxylic acid anhydride or an unsaturated epoxy, monomer (ii) being grafted or copolymerized; made up to 100% with polyethylene;
- an alloy comprising, in % by weight, 55 to 70% PA-6; 5 to 15% polyethylene or copolymers of ethylene and an alpha-olefin grafted with maleic anhydride or glycidyl methacrylate; made up to 100% with polyethylene.

11. The film according to any one of claims 1 to 10, in which the polyolefin of said alloy and the polyolefin of said layer or layers (ii) and/or (iii) are substantially identical.

12. The film according to any one of claims 1 to 11, in which the polyolefin of the layer or layers (ii) and/or (iii) is polyethylene.

13. The film according to any one of claims 1 to 12, in which the polyolefin of the layer or layers (ii) and/or (iii) is formed of polyethylene containing maleic grafted polyethylene or maleic grafted ethylene copolymer.

14. The use of a film according to any one of claims 1 to 13 as a release film for a sheet molding compound.

15. A sandwich structure comprising a central layer of reinforced uncured heat hardenable sheet molding compound; and two outer layers of a film according to any one of claims 1 to 13.

16. A method for producing a sheet molding compound comprising the steps of:
(a) casting, in fluid form, a layer of thermosetting resin over a film according to any one of claims 1 to 13 while continuously advancing said film;
(b) introducing a reinforcing material over said advancing fluid layer;
(c) placing the film according to any one of claims 1 to 13 in contact with an upper surface of said reinforced fluid layer thereby forming a composite sandwich-structure mass;
(d) passing said composite sandwich-structure mass through a series of kneading and compacting rollers; and
(e) winding said sandwich-structure composite mass into a roll.

17. The use of a film according to any one of claims 1 to 13 for a bag for packaging expandable polystyrene granules.
